# EUROPÄISCHE PATENTSCHRIFT

(11) **EP 3 516 172 B1**
(45) Veröffentlichungstag und Bekanntmachung des Hinweises auf die Patenterteilung: **19.08.2020**
(21) Anmeldenummer: 17771416.9
(22) Anmeldetag: 19.09.2017
(51) Int. Cl.: F01C 21/08, F04C 18/16

(54) **ANORDNUNG VON SCHRAUBEN FÜR EINEN SCHRAUBENKOMPRESSOR FÜR EIN NUTZFAHRZEUG**
ASSEMBLY OF SCREWS FOR A SCREW COMPRESSOR FOR A UTILITY VEHICLE
ENSEMBLE DE VIS POUR UN COMPRESSEUR À VIS DE VÉHICULE UTILITAIRE

(30) Priorität: 21.09.2016 DE 102016011436
(43) Veröffentlichungstag der Anmeldung: 31.07.2019
(73) Patentinhaber: KNORR-BREMSE Systeme für Nutzfahrzeuge GmbH, 80809 München (DE)
(72) Erfinder: HEBRARD, Gilles, 80809 München (DE); MARESCOT, Jean-Baptiste, 80809 München (DE); MELLAR, Jörg, 80809 München (DE); WEINHOLD, Thomas, 80809 München (DE)
(86) Internationale Anmeldenummer: PCT/EP2017/073541
(87) Internationale Veröffentlichungsnummer: WO 2018/054858

(56) Entgegenhaltungen:
- WO-A2-2015/162296
- CN-A- 104 564 673
- JP-A- S61 190 184

## Beschreibung

Die vorliegende Erfindung betrifft eine Anordnung von Schrauben für einen Schraubenkompressor für ein Nutzfahrzeug mit wenigstens einer weiblichen Schraube und wenigstens einer männlichen Schraube.

Aus dem Stand der Technik sind bereits Schraubenkompressoren für Nutzfahrzeuge bekannt. Derartige Schraubenkompressoren werden verwendet, um die notwendige Druckluft für beispielsweise das Bremssystem des Nutzfahrzeugs bereitzustellen.

In diesem Zusammenhang sind insbesondere Öl befüllte Kompressoren, insbesondere auch Schraubenkompressoren bekannt, bei denen sich als Aufgabe stellt, die Öltemperatur zu regulieren. Dies wird in der Regel dadurch bewerkstelligt, dass ein externer Ölkühler vorhanden ist, der mit dem Öl befüllten Kompressor und dem Ölkreislauf über ein Thermostatventil verbunden ist. Der Ölkühler ist dabei ein Wärmetauscher, der zwei voneinander getrennte Kreisläufe aufweist, wobei der erste Kreislauf für die heiße Flüssigkeit, also das Kompressoröl, vorgesehen ist und der zweite für die Kühlflüssigkeit. Als Kühlflüssigkeit können beispielsweise Luft, Wassergemische mit einem Frostschutzmittel oder einem anderen Öl verwendet werden.

Dieser Ölkühler muss sodann mit dem Kompressorölkreislauf über Rohre oder Schläuche verbunden werden und der Ölkreislauf muss gegen Leckagen gesichert werden.

Dieses externe Volumen muss des Weiteren mit Öl befüllt werden, so dass auch die Gesamtmenge an Öl vergrößert wird. Dadurch wird die Systemträgheit vergrößert. Darüber hinaus muss der Ölkühler mechanisch untergebracht und befestigt werden, entweder durch umliegend befindliche Halterungen oder durch eine gesonderte Halterung, was zusätzliche Bestigungsmittel, aber auch Bauraum benötigt.

Aus der JP 61-190184 ist ein Schraubendesign für einen Schraubenkompressor bekannt, das turbinenschaufelartige weibliche Rotoren aufweist. Hierdurch soll das Dichtverhalten der Schrauben zueinander verbessert werden.

Aus der WO 2015/162296 ist ein Rotorenpark für einen Verdichterblock einer Schraubenmaschine bekannt, wobei ein turbinenschaufelartiger Rotor vorgesehen ist.

Die CN 104 564 673 offenbart ebenfalls ein vergleibares Turbinendesign wie die WO 2015/162296 A2.

Es ist die Aufgabe der vorliegenden Erfindung, das Design miteinander kämmender Schrauben eines Schraubenkompressors derart auszubilden, dass die Verdichtungsleistung eines Schraubenkompressors verbessert werden kann.

Diese Aufgabe wird erfindungsgemäß gelöst durch eine Anordnung von Schrauben für einen Schraubenkompressor für ein Nutzfahrzeug mit den Merkmalen des Anspruchs 1. Danach ist vorgesehen, dass eine Anordnung von Schrauben für einen Schraubenkompressor für ein Nutzfahrzeug mit wenigstens einer weiblichen Schraube und wenigstens einer männlichen Schraube ausgeführt ist, wobei die weibliche Schraube und die männliche Schraube jeweils Zähne aufweisen, die miteinander kämmen, und wobei die Zähne der weiblichen Schraube eine Abwälzzahnflanke aufweisen, die für das Abwälzen auf einer Zahnflanke der männlichen Schraube vorgesehen ist, wobei die Abwälzzahnflanke im Spitzenbereich einen konvex abgerundeten Abwälzspitzenbereich aufweist, der einen ersten Radius aufweist, wobei zwischen zwei benachbarten Zähnen der weiblichen Schraube ein Zahngrund vorgesehen ist, der über einen flachen Übergangsbereich mit dem Abwälzspitzenbereich verbunden ist, und wobei der Zahngrund zwischen zwei Zähnen der weiblichen Schraube im Wesentlichen konkav mit wenigstens einem zweiten Radius abgerundet ist, wobei der zweite Radius ca. 2,5 bis 3,5-fach größer ist als der erste Radius.

Die Erfindung basiert auf dem Grundgedanken, durch die Ausgestaltung des Spitzenbereiches der weiblichen Schraube, die mit den männlichen Schraubenzähnen kämmt, sicherzustellen, dass im Moment des maximalen Eingriffs der Zähne miteinander eine sichere Dichtwirkung zwischen den beiden Schraubenrotoren erfolgt und hierdurch ein Vorschieben des zu komprimierenden Fluids, insbesondere Druckluft, erfolgen kann. Darüber hinaus soll durch eine derartige Ausgestaltung die Benetzbarkeit der Oberflächen der Zähne und auch der Schraubenrotoren bzw. Schrauben mit Öl verbessert werden.

Insbesondere kann vorgesehen sein, dass die Anzahl der Zähne der weiblichen Schraube höher ist als die der männlichen Schraube. Hierdurch wird es möglich, dass Verhältnis der Drehgeschwindigkeiten der weiblichen Schraube und der männlichen Schraube entsprechend zueinander einstellen zu können.

Darüber hinaus kann vorgesehen sein, dass das Übersetzungsverhältnis von weiblicher Schraube zu männlicher Schraube 3:2 beträgt. Somit wird es möglich, die Geschwindigkeitsverhältnisse ebenfalls im Verhältnis 3:2 einstellen zu können.

Dabei kann die weibliche Schraube 6 Zähne und die männliche Schraube 4 Zähne aufweisen. Hierdurch wird es möglich, eine vergleichsweise einfache Gestaltung und ein sehr effektives Übersetzungsverhältnis zu erreichen. Eine einfache Herstellung ist möglich und ein vergleichsweise geräuscharmer Betrieb bei hoher Verdichterleistung kann erreicht werden.

Die weibliche Schraube und die männliche Schraube können im Wesentlichen denselben Nenndurchmesser aufweisen. Hierdurch wird das Kämmen der männlichen Schraube und der weiblichen Schraube miteinander vereinfacht. Außerdem wird auch die Lagerung der Schrauben im Gehäuse des Schraubenkompressors hierdurch verbessert.

Erfindungsgemäß ist vorgesehen, dass die Zähne der weiblichen Schraube auf der der Abwälzzahnflanke abgewandten Seite eine Aufsetzflanke zum Aufsatz auf die Zähne der männlichen Schraube aufweisen, wobei die Aufsetzflanke von dem Abwälzspitzenbereich durch einen Spitzenbereich mit einem dritten Radius übergeht, der kleiner ist, als der erste Radius, insbesondere ca. 2,5-fach bis 3,5-fach kleiner als der erste Radius. Hierdurch wird erreicht, dass der Bereich in der Spitze der Zähne der weiblichen Schraube, der in den tiefsten Punkt des Zahngrunds der männlichen Schraube eintaucht, mit einem möglichst geringen Radius ausgeführt ist, zugleich aber die Abwälzbewegung der Spitze der weiblichen Schraubenzähne hin in den Zahngrund der männlichen Schraube nicht abrupt, sondern mit einem vergleichsweise gleichmäßigen Übergang erfolgen kann. Gleichzeitig wird durch die Wahl des dritten Radius auch die Kontaktlinie von der Spitze des weiblichen Zahns mit dem tiefsten Bereich des Zahngrunds der männlichen Zähne der männlichen Schraube bestimmt, wobei die Wahl eines vergleichsweise geringen Radius hier die Dichtwirkung erheblich verbessert.

Der Spitzenbereich kann unmittelbar ohne Zwischenbereich in den Zahngrund der weiblichen Schraube übergehen. Hier ist es nicht erforderlich, einen Übergangsbereich vorzusehen, da diese Zahnflanke sich nur dichtend an die entsprechende Gegenflanke der männlichen Schraube anlegen muss, nicht jedoch auf diese beim Antreiben und Kämmen abwälzt.

Darüber hinaus kann vorgesehen sein, dass die Zähne der weiblichen Schraube turbinenschaufelartig ausgebildet sind. Dieses Design mit vergleichsweise schlanken Zähnen auf der weiblichen Schraube ermöglicht es, dass die Zähne der weiblichen Schraube aufgrund des Designs vergleichsweise elastisch ausgebildet sind und sich somit in die Zahnzwischenräume und Zahngründe der männlichen Schraube dichtend einfügen können.

Die Zähne der männlichen Schraube weisen erfindungsgemäß einen Zahngrund auf, an dessen tiefsten Punkt ein abgerundeter Knick vorgesehen ist, wobei der tiefste Punkt des Knicks zum Eingriff in den Abwälzspitzenbereich und den Spitzenbereich vorgesehen ist. Durch diese knickartige Ausbildung wird ebenfalls die Dichtwirkung zwischen den Zähnen der weiblichen Schraube und der männlichen Schraube verbessert.

Insbesondere kann vorgesehen sein, dass der Knick im Wesentlichen einen Winkel zwischen ca. 90° bis ca. 110° einschließt. Ein derartig ausgebildeter Knick ermöglicht ebenfalls die Ausbildung einer gut dichtenden Kontaktlinie im Moment des Eingriffs des Spitzenbereichs der weiblichen Zähne in den tiefsten Punkt des Zahngrunds, also den Knick der männlichen Schraube.

Weitere Einzelheiten und Vorteile der Erfindung sollen nun anhand eines in den Zeichnungen näher dargestellten Ausführungsbeispiels erläutert werden.

Es zeigen:
- Fig. 1: eine schematische Schnittzeichnung durch einen erfindungsgemäßen Schraubenkompressor; und
- Fig. 2: eine schematische Frontansicht auf die miteinander kämmende männliche und weibliche Schraube des Schraubenkompressors.

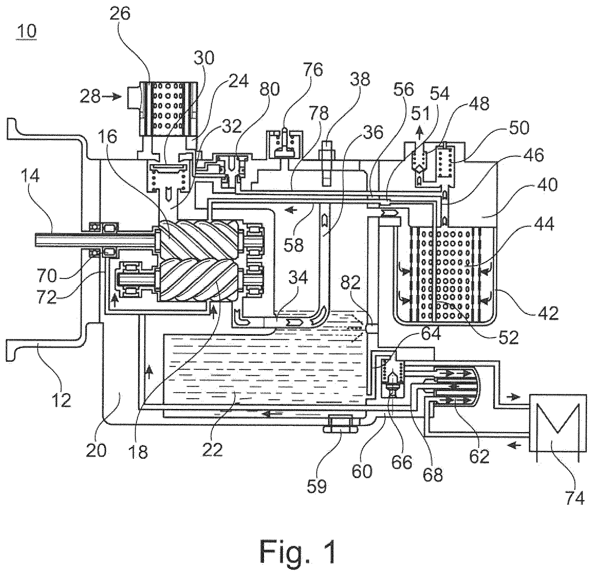

**Fig. 1** zeigt in einer schematischen Schnittdarstellung einen Schraubenkompressor 10 im Sinne eines Ausführungsbeispiels für die vorliegende Erfindung.

Der Schraubenkompressor 10 weist einen Befestigungsflansch 12 zur mechanischen Befestigung des Schraubenkompressors 10 an einem hier nicht näher gezeigten Elektromotor auf.

Gezeigt ist jedoch die Eingangswelle 14, über die das Drehmoment vom Elektromotor auf eine der beiden Schrauben 16 und 18, nämlich die Schraube 16 übertragen wird.

Die Schraube 18 kämmt mit der Schraube 16 und wird über diese angetrieben.

Der Schraubenkompressor 10 weist ein Gehäuse 20 auf, in dem die wesentlichen Komponenten des Schraubenkompressors 10 untergebracht sind.

Das Gehäuse 20 ist mit Öl 22 befüllt.

Lufteingangsseitig ist am Gehäuse 20 des Schraubenkompressors 10 ein Einlassstutzen 24 vorgesehen. Der Einlassstutzen 24 ist dabei derart ausgebildet, dass an ihm ein Luftfilter 26 angeordnet ist. Außerdem ist radial am Lufteinlassstutzen 24 ein Lufteinlass 28 vorgesehen.

Im Bereich zwischen Einlassstutzen 24 und der Stelle, an dem der Einlassstutzen 24 am Gehäuse 20 ansetzt, ist ein federbelasteter Ventileinsatz 30 vorgesehen, hier als Axialdichtung ausgeführt.

Dieser Ventileinsatz 30 dient als Rückschlagventil.

Stromabwärts des Ventileinsatzes 30 ist ein Luftzuführkanal 32 vorgesehen, der die Luft den beiden Schrauben 16, 18 zuführt.

Ausgangsseitig der beiden Schrauben 16, 18 ist ein Luftauslassrohr 34 mit einer Steigleitung 36 vorgesehen.

Im Bereich des Endes der Steigleitung 36 ist ein Temperaturfühler 38 vorgesehen, mittels dessen die Öltemperatur überwachbar ist.

Weiter vorgesehen ist im Luftauslassbereich ein Halter 40 für ein Luftentölelement 42.

Der Halter 40 für das Luftentölelement weist im montierten Zustand im dem Boden zugewandten Bereich (wie auch in Fig. 1 gezeigt) das Luftentölelement 42 auf.

Weiter vorgesehen ist im Inneren der Luftentölelement 42 ein entsprechendes Filtersieb bzw. bekannte Filter- und Ölabscheidevorrichtungen 44, die nicht näher im Einzelnen spezifiziert werden.

Im zentralen oberen Bereich, bezogen auf den montierten und betriebsfertigen Zustand (also wie in Fig. 1 gezeigt), weist der Halter für das Luftentölelement 40 eine Luftausgangsöffnung 46 auf, die zu einem Rückschlagventil 48 und einem Mindestdruckventil 50 führen. Das Rückschlagventil 48 und das Mindestdruckventil 50 können auch in einem gemeinsamen, kombinierten Ventil ausgebildet sein.

Nachfolgend des Rückschlagventils 48 ist der Luftauslass 51 vorgesehen.

Der Luftauslass 51 ist mit entsprechend bekannten Druckluftverbrauchern in der Regel verbunden.

Um das im Luftentölelement 42 befindliche und abgeschiedene Öl 22 wieder in das Gehäuse 20 zurückzuführen, ist eine Steigleitung 52 vorgesehen, die ausgangs des Halters 40 für das Luftentölelement 42 beim Übertritt in das Gehäuse 20 ein Filter- und Rückschlagventil 54 aufweist.

Stromabwärts des Filter- und Rückschlagventils 54 ist in einer Gehäusebohrung eine Düse 56 vorgesehen. Die Ölrückführleitung 58 führt zurück in etwa den mittleren Bereich der Schraube 16 oder der Schraube 18, um dieser wieder Öl 22 zuzuführen.

Im im montierten Zustand befindlichen Bodenbereich des Gehäuses 20 ist eine Ölablassschraube 59 vorgesehen. Über die Ölablassschraube 59 kann eine entsprechende Ölablauföffnung geöffnet werden, über die das Öl 22 abgelassen werden kann.

Im unteren Bereich des Gehäuses 20 ist auch der Ansatz 60 vorhanden, an dem der Ölfilter 62 befestigt wird. Über einen Ölfiltereinlasskanal 64, der im Gehäuse 20 angeordnet ist, wird das Öl 22 zunächst zu einem Thermostatventil 66 geleitet.

Anstelle des Thermostatventils 66 kann eine Steuerungs- und/oder Regelungseinrichtung vorgesehen sein, mittels derer die Öltemperatur des im Gehäuse 20 befindlichen Öls 22 überwachbar und auf einen Sollwert einstellbar ist.

Stromabwärts des Thermostatventils 66 ist sodann der Öleinlass des Ölfilters 62, der über eine zentrale Rückführleitung 68 das Öl 22 wieder zurück zur Schraube 18 oder zur Schraube 16, aber auch zum ölgeschmierten Lager 70 der Welle 14 führt. Im Bereich des Lagers 70 ist auch eine Düse 72 vorgesehen, die im Gehäuse 20 im Zusammenhang mit der Rückführleitung 68 vorgesehen ist.

Der Kühler 74 ist am Ansatz 60 angeschlossen.

Im oberen Bereich des Gehäuses 20 (bezogen auf den montierten Zustand) befindet sich ein Sicherheitsventil 76, über das ein zu großer Druck im Gehäuse 20 abgebaut werden kann.

Vor dem Mindestdruckventil 50 befindet sich eine Bypassleitung 78, die zu einem Entlastungsventil 80 führt. Über dieses Entlastungsventil 80 das mittels einer Verbindung mit der Luftzuführung 32 angesteuert wird kann Luft in den Bereich des Lufteinlasses 28 zurückgeführt werden. In diesem Bereich kann ein nicht näher gezeigtes Entlüftungsventil und auch eine Düse (Durchmesserveringerung der zuführenden Leitung) vorgesehen sein.

Darüber hinaus kann ungefähr auf Höhe der Leitung 34 in der Außenwand des Gehäuses 20 ein Öllevelsensor 82 vorgesehen sein. Dieser Öllevelsensor 82 kann beispielsweise ein optischer Sensor sein und derart beschaffen und eingerichtet, dass anhand des Sensorsignals erkannt werden kann, ob der Ölstand im Betrieb oberhalb des Öllevelsensors 82 ist oder ob der Öllevelsensor 82 frei liegt und hierdurch der Ölstand entsprechend gefallen ist.

Im Zusammenhang mit dieser Überwachung kann auch eine Alarmeinheit vorgesehen sein, die eine entsprechende Fehlermeldung oder Warnmeldung an den Nutzer des Systems ausgibt bzw. weiterleitet.

Die Funktion des in Fig. 1 gezeigten Schraubenkompressors 10 ist dabei wie folgt:
Luft wird über den Lufteinlass 28 zugeführt und gelangt über das Rückschlagventil 30 zu den Schrauben 16, 18, wo die Luft komprimiert wird. Das komprimierte Luft-Öl-Gemisch, das mit einem Faktor zwischen 5- bis 16facher Komprimierung nach den Schrauben 16 und 18 durch die Auslassleitung 34 über das Steigrohr 36 aufsteigt, wird direkt auf den Temperaturfühler 38 geblasen.

Die Luft, die noch teilweise Ölpartikel trägt, wird sodann über den Halter 40 in das Luftentölelement 42 geführt und gelangt, sofern der entsprechende Mindestdruck erreicht wird, in die Luftauslassleitung 51.

Das im Gehäuse 20 befindliche Öl 22 wird über den Ölfilter 62 und ggf. über den Wärmetauscher 74 auf Betriebstemperatur gehalten.

Sofern keine Kühlung notwendig ist, wird der Wärmetauscher 74 nicht verwendet und ist auch nicht zugeschaltet.

Die entsprechende Zuschaltung erfolgt über das Thermostatventil 68. Nach der Aufreinigung im Ölfilter 64 wird über die Leitung 68 Öl der Schraube 18 oder der Schraube 16, aber auch dem Lager 72 zugeführt. Die Schraube 16 oder die Schraube 18 wird über die Rückführleitung 52, 58 mit Öl 22 versorgt, hier erfolgt die Aufreinigung des Öls 22 im Luftentölelement 42.

Über den nicht näher gezeigten Elektromotor, der sein Drehmoment über die Welle 14 auf die Schraube 16 überträgt, die wiederum mit der Welle 18 kämmt, werden die Schrauben 16 und 18 des Schraubenkompressors 10 angetrieben.

Über das nicht näher gezeigte Entlastungsventil 80 wird sichergestellt, dass im Bereich der Zuleitung 32 nicht der hohe Druck, der im Betriebszustand beispielsweise ausgangsseitig der Schrauben 16, 18 herrscht, eingesperrt werden kann, sondern dass insbesondere beim Anlaufen des Kompressors im Bereich der Zuleitung 32 stets ein niedriger Eingangsdruck, insbesondere Atmosphärendruck, besteht. Andernfalls würde mit einem Anlaufen des Kompressors zunächst ein sehr hoher Druck ausgangsseitig der Schrauben 16 und 18 entstehen, der den Antriebsmotor überlasten würde.

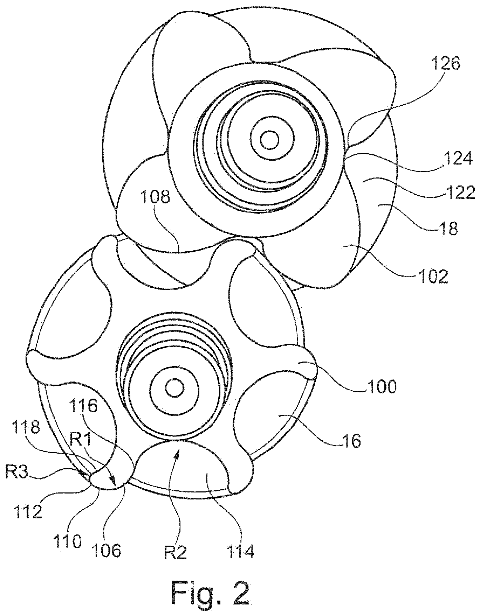

**Fig. 2** zeigt in Frontaldarstellung die miteinander kämmende weibliche Schraube 16 und die männliche Schraube 18.

Wie dies gut aus Fig. 2 ersichtlich ist, weist die weibliche Schraube 16 sechs identisch aufgebaute, gleichmäßig über den Umfang verteilte Schraubzähne 100 auf.

Demgegenüber weist die männliche Schraube 18 vier ebenfalls gleichmäßig über den Umfang verteilte Schraubzähne 102 auf.

Die Anzahl der Zähne 100 der weiblichen Schraube 16 ist damit höher als die der männlichen Schraube 18.

Durch eine derartige Ausgestaltung wird ein Übersetzungsverhältnis von weiblicher Schraube 16 zu männlicher Schraube 18 von 3 :2 ausgebildet.

Die weibliche Schraube 16 und die männliche Schraube 18 weisen im Wesentlichen denselben Nenndurchmesser auf.

Wie dies weiter aus Fig. 2 ersichtlich ist, weisen die Zähne 100 der weiblichen Schraube 16 jeweils eine Abwälzzahnflanke 106 auf, die für das Abwälzen auf der Zahnflanke 108 der männlichen Schraube 18 vorgesehen ist.

Die Abwälzzahnflanke 106 weist in ihrem Spitzenbereich 110 einen konvex abgerundeten Abwälzspitzenbereich 112 auf, der einen erste Radius R1 aufweist.

Darüber hinaus ist zwischen zwei benachbarten Zähnen 100 der weiblichen Schraube 16 ein Zahngrund 114 vorgesehen, der einen zweiten Radius R2 aufweist.

Der zweite Radius R2 ist dabei 2,5-fach bis 3,5-fach größer als der erste Radius R1, hier 3-fach größer als der erste Radius R1.

Der Abwälzspitzenbereich 112 und der Zahngrund 114 gehen über eine flachen Übergangsbereich 116 ineinander über. Im Übergangsbereich 116 ist ein Radius von nahe unendlich, d.h. eine vollständige Abflachung vorgesehen.

Die Zähne 100 der weiblichen Schraube 16 weisen auf der der Abwälzzahnflanke 106 abgewandten Seite eine Aufsetzflanke 118 auf, die zum Aufsatz auf die Zähne 102 der männlichen Schraube 18 dienen.

Die Aufsetzflanke 118 geht von dem Abwälzspitzenbereich 112 durch einen Spitzenbereich 110 mit einem dritten Radius R3 ineinander über.

Der dritte Radius R3 ist dabei kleiner als der erste Radius R1, und zwar hier 3-fach kleiner als der erste Radius R1.

Das Verhältnis von Radius R3 zu Radius R1 kann sich im Bereich zwischen 2,5-fach bis 3,5-fach kleiner als der erste Radius R1 bewegen für den Wert von Radius R3.

Der Spitzenbereich 110 selbst geht unmittelbar ohne Zwischenbereich in den Zahngrund 114 der weiblichen Schraube 16 über.

Grundsätzlich ist zu bemerken mit Blick auf Fig. 2, dass die Zähne 100 der weiblichen Schraube 16 turbinenschaufelartig ausgebildet sind.

Die Zähne 102 der männlichen Schraube 18 weisen ebenfalls einen Zahngrund 122 auf, an dessen tiefsten Punkt 124 ein Knick 126 vorgesehen ist.

Der Knick 126 ist dabei abgerundet ausgebildet und dient zum Eingriff mit dem Abwälzspitzenbereich 112 in dem Spitzenbereich 110 der Zähne 100 der weiblichen Schraube 16.

Der Knick 126 weist dabei einen im Wesentlichen überspitzen Winkel auf.

Der Winkel kann dabei im Bereich zwischen 90° bis ca. 110° ausgebildet sein.

### BEZUGSZEICHENLISTE

- 10: Schraubenkompressor
- 12: Befestigungsflansch
- 14: Eingangswelle
- 16: Schrauben
- 18: Schrauben
- 20: Gehäuse
- 22: Öl
- 24: Einlassstutzen
- 26: Luftfilter
- 28: Lufteinlass
- 30: Ventileinsatz
- 32: Luftzuführkanal
- 34: Luftauslassrohr
- 36: Steigleitung
- 38: Temperaturfühler
- 40: Halter für ein Luftentölelement
- 42: Luftentölelement
- 44: Filtersieb bzw. bekannte Filter- bzw. Ölabscheidevorrichtungen
- 46: Luftausgangsöffnung
- 48: Rückschlagventil
- 50: Mindestdruckventil
- 51: Luftauslass
- 52: Steigleitung
- 54: Filter- und Rückschlagventil
- 56: Düse
- 58: Ölrückführleitung
- 59: Ölablassschraube
- 60: Ansatz
- 60a: äußerer Ring
- 60b: innerer Ring
- 62: Ölfilter
- 64: Ölfiltereinlasskanal
- 66: Thermostatventil
- 68: Rückführleitung
- 70: Lager
- 72: Düse
- 74: Kühler, Wärmetauscher
- 76: Sicherheitsventil
- 78: Bypassleitung
- 80: Entlastungsventil
- 82: Öllevelsensor
- 100: Schraubzähne
- 102: Schraubzähne
- 106: Abwälzflanke
- 108: Zahnflanke
- 110: Spitzenbereich
- 112: Abwälzspitzenbereich
- 114: Zahngrund
- 116: Übergangsbereich
- 118: Aufsetzflanke
- 122: Zahngrund
- 124: tiefster Punkt
- 126: Knick

- R1: erster Radius
- R2: zweiter Radius
- R3: dritter Radius

## Patentansprüche

1. Anordnung von Schrauben (16, 18) für einen Schraubenkompressor für ein Nutzfahrzeug mit wenigstens einer weiblichen Schraube (16) und wenigstens einer männlichen Schraube (18), wobei die weibliche Schraube (16) und die männliche Schraube (18) jeweils Zähne (100, 102) aufweisen, die miteinander kämmen, und wobei die Zähne (100) der weiblichen Schraube (16) eine Abwälzzahnflanke (106) aufweisen, die für das Abwälzen auf einer Zahnflanke (108) der männlichen Schraube (18) vorgesehen ist, wobei die Abwälzzahnflanke (106) im Spitzenbereich (110) einen konvex abgerundeten Abwälzspitzenbereich (112) aufweist, der einen ersten Radius (R1) aufweist, wobei zwischen zwei benachbarten Zähnen (100) der weiblichen Schraube (16) ein Zahngrund (114) vorgesehen ist, der über einen flachen Übergangsbereich (116) mit dem Abwälzspitzenbereich (112) verbunden ist, und wobei der Zahngrund (114) zwischen zwei Zähnen (100) der weiblichen Schraube (16) im Wesentlichen konkav mit wenigstens einem zweiten Radius (R2) abgerundet ist, **dadurch gekennzeichnet dass** der zweite Radius (R2) ca. 2,5 bis 3,5-fach größer ist als der erste Radius (R1), und dass die Zähne (100) der weiblichen Schraube (16) auf der Abwälzzahnflanke (106) abgewandten Seite eine Aufsetzflanke (118) zum Aufsatz auf die Zähne (102) der männlichen Schraube (18) aufweisen, und dass die Aufsetzflanke (118) von dem Abwälzspitzenbereich (112) durch einen Spitzenbereich (110) mit einem dritten Radius (R3) übergeht, der kleiner ist, als der erste Radius (R1), insbesondere ca. 2,5 bis 3,5-fach kleiner als der erste Radius (R1), und dass die Zähne (102) der männlichen Schraube (18) einen Zahngrund (122) aufweisen, an dessen tiefstem Punkt (124) ein abgerundeter Knick (126) vorgesehen ist, wobei der tiefste Punkt (124) der Knick (126) zum Eingriff mit dem Abwälzspitzenbereich (112) und dem Spitzenbereich (110) vorgesehen ist..

2. Anordnung von Schrauben (16, 18) für einen Schraubenkompressor nach Anspruch 1, **dadurch gekennzeichnet, dass** die Anzahl der Zähne (100) der weiblichen Schraube (16) höher ist als die der männlichen Schraube (18).

3. Anordnung von Schrauben (16, 18) für einen Schraubenkompressor nach Anspruch 2,
**dadurch gekennzeichnet, dass**
das Übersetzungsverhältnis von weiblicher Schraube (16) zu männlicher Schraube (18) drei zu zwei beträgt.

4. Anordnung von Schrauben (16, 18) für einen Schraubenkompressor nach Anspruch 3,
**dadurch gekennzeichnet, dass**
die weibliche Schraube (16) sechs Zähne (100) und die männliche Schraube (18) vier Zähne (102) aufweist.

5. Anordnung von Schrauben (16, 18) für einen Schraubenkompressor nach einem der vorhergehenden Ansprüche,
**dadurch gekennzeichnet, dass**
die weibliche Schraube (16) und die männliche Schraube (18) im Wesentlichen denselben Nenndurchmesser aufweisen.

6. Anordnung von Schrauben (16, 18) für einen Schraubenkompressor nach einem der vorhergehenden Ansprüche,
**dadurch gekennzeichnet, dass**
die Zähne (100) der weiblichen Schraube (16) turbinenschaufelartig ausgebildet sind.

7. Anordnung von Schrauben (16, 18) für einen Schraubenkompressor nach einem der vorhergehenden Ansprüche,
**dadurch gekennzeichnet, dass**
der Knick (126) im Wesentlichen einen Winkel zwischen ca. 90° bis ca. 110° einschließt.

## Claims

1. Arrangement of screws (16, 18) for a screw compressor for a utility vehicle, having at least one female screw (16) and at least one male screw (18), wherein the female screw (16) and the male screw (18) each have teeth (100, 102) which mesh with one another, and wherein the teeth (100) of the female screw (16) have a rolling tooth flank (106) which is provided for rolling on a tooth flank (108) of the male screw (18), wherein the rolling tooth flank (106) has, in the tip region (110), a convexly rounded rolling tip region (112) which has a first radius (R1), wherein, between two adjacent teeth (100) of the female screw (16), there is provided a tooth base (114) which is connected via a flat transition region (116) to the rolling tip region (112), and wherein the tooth base (114) between two teeth (100) of the female screw (16) is substantially concavely rounded with at least a second radius (R2), **characterized in that** the second radius (R2) is approximately 2.5 to 3.5 times greater than the first radius (R1), and **in that** the teeth (100) of the female screw (16) have, on the side averted from the rolling tooth flank (106), a setting-down flank (118) for the setting-down onto the teeth (102) of the male screw (18), and **in that** the setting-down flank (118) transitions from the rolling tip region (112) by means of a tip region (110) with a third radius (R3) which is smaller than the first radius (R1), in particular approximately 2.5 to 3.5 times smaller than the first radius (R1), and **in that** the teeth (102) of the male screw (18) have a tooth base (122), at -the lowest point (124) of which there is provided a rounded kink (126), wherein the lowest point (124) of the kink (126) is provided for the engagement with the rolling tip region (112) and the tip region (110).

2. Arrangement of screws (16, 18) for a screw compressor according to Claim 1,
**characterized in that**
the number of teeth (100) of the female screw (16) is greater than that of the male screw (18).

3. Arrangement of screws (16, 18) for a screw compressor according to Claim 2,
**characterized in that**
the transmission ratio of female screw (16) to male screw (18) is three to two.

4. Arrangement of screws (16, 18) for a screw compressor according to Claim 3,
**characterized in that**
the female screw (16) has six teeth (100) and the male screw (18) has four teeth (102).

5. Arrangement of screws (16, 18) for a screw compressor according to any of the preceding claims,
**characterized in that**
the female screw (16) and the male screw (18) have substantially the same nominal diameter.

6. Arrangement of screws (16, 18) for a screw compressor according to any of the preceding claims,
**characterized in that**
the teeth (100) of the female screw (16) are formed in the manner of turbine blades.

7. Arrangement of screws (16, 18) for a screw compressor according to any of the preceding claims,
**characterized in that**
the kink (126) substantially encloses an angle between approximately 90° and approximately 110°.

## Revendications

1. Agencement de vis (16, 18) d'un compresseur à vis d'un véhicule utilitaire, comprenant au moins une vis (16) femelle et au moins une vis (18) mâle, la vis (16) femelle et la vis (18) mâle ayant chacune des dents (100, 102), qui engrènent les unes avec les autres et dans lequel les dents (100) de la vis (16) femelle ont un flanc (106) de dent de roulement prévu pour le roulement sur un flanc (108) de dent de la vis (18) mâle, le flanc (106) de dent de roulement ayant, dans la partie (110) de pointe, une partie (112) de pointe de roulement arrondie de manière convexe, qui a un premier rayon (R1), dans lequel, entre deux dents (100) voisines de la vis (16) femelle, est prévu un fond (114) de dent, qui est relié à la partie (112) de pointe de roulement, par une partie (116) plane de transition et dans lequel le fond (114) de dent, entre deux dents (100) de la vis (16) femelle, est arrondi de manière sensiblement concave, en ayant au moins un deuxième rayon (R2),
**caractérisé en ce que**
le deuxième rayon (R2) est environ 2,5 à 3,5 fois plus grand que le premier rayon (R1) et **en ce que**
les dents (100) de la vis (16) femelle ont, du côté loin du flanc (106) de dent de roulement, un flanc (118) d'application pour l'application sur les dents (102) de la vis (18) mâle, et **en ce que** le flanc (118) d'application se change de la partie (112) de pointe de roulement en une partie (110) de pointe ayant un troisième rayon (R3), qui est plus petit que le premier rayon (R1), en étant notamment environ 2,5 à 3,5 fois plus petit que le premier rayon (R1), et **en ce que** les dents (102) de la vis (18) mâle ont un fond (122) de dent, au point (124) le plus bas duquel est prévu un coude (126) arrondi, le point (124) le plus bas du coude (126) étant prévu pour se prendre avec la partie (112) de pointe de roulement et avec la partie (110) de pointe.

2. Agencement de vis (16, 18) d'un compresseur à vis suivant la revendication 1,
**caractérisé en ce que**
le nombre des dents (100) de la vis (16) femelle est plus grand que celui de la vis (18) mâle.

3. Agencement de vis (16, 18) d'un compresseur à vis suivant la revendication 2,
**caractérisé en ce que**
le rapport de multiplication de la vis (16) femelle à la vis (18) mâle est de trois à deux.

4. Agencement de vis (16, 18) d'un compresseur à vis suivant la revendication 3,
**caractérisé en ce que**
la vis (16) femelle a six dents (100) et la vis (18) mâle a quatre dents (102).

5. Agencement de vis (16, 18) d'un compresseur à vis suivant l'une des revendications précédentes,
**caractérisé en ce que**
la vis (16) femelle et la vis (18) mâle ont sensiblement le même diamètre nominal.

6. Agencement de vis (16, 18) d'un compresseur à vis suivant l'une des revendications précédentes,
**caractérisé en ce que**
les dents (100) de la vis (16) femelle sont constituées en étant du type en aube de turbine.

7. Agencement de vis (16, 18) d'un compresseur à vis suivant l'une des revendications précédentes,
**caractérisé en ce que**
le coude (126) forme sensiblement un angle compris entre environ 90° à environ 110°.
